# EUROPÄISCHE PATENTSCHRIFT

(11) **EP 1 608 110 B1**
(45) Veröffentlichungstag und Bekanntmachung des Hinweises auf die Patenterteilung: **18.10.2006**
(21) Anmeldenummer: 04014003.0
(22) Anmeldetag: 15.06.2004
(51) Int. Cl.: H04L 12/56, H04Q 7/36

(54) **Verfahren zur Funkkommunikation und Funkkommunikationssystem mit Relaisfunkstationen in Zick-Zack-Anordnung**
Method for radio communication and radio communication system with radio relay stations in a zig-zag-arrangement
Méthode de communication par radio et système de communication par radio avec des stations de relais en arrangement zig-zag

(43) Veröffentlichungstag der Anmeldung: 21.12.2005
(73) Patentinhaber: SIEMENS AKTIENGESELLSCHAFT, 80333 München (DE)
(72) Erfinder: Li, Hui, Dr., 80937 München (DE); Lott, Matthias, 82061 Neuried (DE); Schulz, Egon, Dr., 80993 München (DE)

(56) Entgegenhaltungen:
- US-B1- 6 275 704
- US-B1- 6 459 895
- OMER ILERI: "Pricing for enabling forwarding in wireless ad-hoc networks" MASTER THESIS RUTGERS UNIVERSITY, [Online] 1. Januar 2004 (2004-01-01), Seiten 114-123, XP002304522 NEW BRUNSWICK, NJ, USA Gefunden im Internet: URL:http://www.winlab.rutgers.edu/~omerile r/thesis.pdf> [gefunden am 2004-11-08]
- CHAO GUI AND PRASANT MOHAPATRA: "A self healing and optimizing routing technique for ad-hoc networks" TECH-REPORTS CS FAC., [Online] Juni 2002 (2002-06), XP002304523 DAVIS, CA, USA Gefunden im Internet: URL:http://www.cs.ucdavis.edu/research/tec h-reports/2002/CSE-2002-23.pdf> [gefunden am 2004-11-08]

## Beschreibung

Die Erfindung betrifft ein Verfahren zur Kommunikation per Funk, bei dem Nachrichten zwischen einer ersten und einer zweiten Funkstation über Relaisfunkstationen weitergeleitet werden. Weiterhin betrifft die Erfindung ein Funkkommunikationssystem zur Durchführung des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige Teilnehmerfunkstationen, Relaisfunkstationen, oder netzseitige Funkeinrichtungen wie Funkzugangspunkte oder Basisstationen handeln. In einem Mobilfunkkommunikationssystem handelt es sich bei zumindest einem Teil der Teilnehmerfunkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend aus Basisstationen, Einrichtungen zur Kontrolle und Steuerung der Basisstationen und weiteren netzseitigen Einrichtungen ausgebildet.

Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind in der Regel im Vergleich zu üblichen Mobilfunkzellen klein. Beispiele verschiedener Standards für WLANs sind HiperLAN, DECT, IEEE 802.11, Bluetooth und WATM. Über die WLAN Funkzugangspunkte kann eine Anbindung an andere Kommunikationssysteme, so z.B. an das Internet erfolgen.

Der Zugriff von Teilnehmerfunkstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerfunkstationen aufgeteilt werden. Auch Kombinationen von Vielfachzugriffsverfahren sind möglich.

Funkstationen können nur dann direkt miteinander kommunizieren, wenn sie sich beide im Funkabdeckungsbereich der jeweils anderen Funkstation befinden. Ist eine direkte Kommunikation nicht möglich, so können Nachrichten zwischen diesen Funkstationen über andere Funkstationen, welche - indem sie die Nachrichten weiterleiten - als Relaisfunkstationen fungieren, übertragen werden. Eine derartige Nachrichtenweiterleitung kann, abhängig von der konkreten Ausgestaltung des Funkkommunikationssystems, sowohl von Teilnehmerfunkstationen als auch von netzseitigen Funkstationen durchgeführt werden. Nachrichten können beispielsweise in einem WLAN zwischen einem Funkzugangspunkt und weit von dem Funkzugangspunkt entfernten Teilnehmerfunkstationen weitergleitet werden. Auch in einem Adhoc-Modus eines Funkkommunikationssystems können Teilnehmerfunkstationen über einen oder mehrere Sprünge (Hop bzw. Multihop) miteinander kommunizieren, ohne dass vermittelnde Einrichtungen wie z.B. Basisstationen oder Funkzugangspunkte zwischengeschaltet werden. Bei einer Nachrichtenübertragung von einer Teilnehmerfunkstation an eine andere Teilnehmerfunkstation außerhalb ihres Funkabdeckungsbereiches werden die Nachrichten von anderen Teilnehmerfunkstationen weitergleitet, welche somit als Relaisfunkstationen fungieren.

Das Dokument
Over Ileri: "Pricing for enabling forwarding in wireless ad hoc networks", Master Thesis Rutgers University, 1.1.2004, Seiten 114-123, XP002304522, New Brunswick, NJ, USA, betrifft die Funkübertragung über mehrere Sprünge. Es wird eine Zick-Zack-Topologie von Knoten dargestellt.

Der Erfindung liegt die Aufgabe zugrunde, ein effizientes Verfahren zur Kommunikation per Funk aufzuzeigen, bei welchem Nachrichten zwischen zwei Funkstationen durch Weiterleitung über Relaisfunkstationen übertragen werden. Weiterhin soll ein geeignetes Funkkommunikationssystem zur Durchführung des Verfahrens vorgestellt werden.

Diese Aufgabe wird durch ein Verfahren mit den Merkmalen des Anspruchs 1 und durch ein Funkkommunikationssystem mit Merkmalen eines nebengeordneten Anspruchs gelöst.

Vorteilhafte Ausgestaltungen und Weiterbildungen sind Gegenstand von Unteransprüchen.

In dem Verfahren zur Kommunikation per Funk werden Nachrichten zwischen einer ersten Funkstation und einer zweiten Funkstation übertragen, indem die Nachrichten durch mindestens drei Relaisfunkstationen nacheinander weitergeleitet werden. Erfindungsgemäß sind die Relaisfunkstationen mit einer ungeraden Nummerierung bezüglich ihrer Position bei der Weiterleitung zumindest annähernd auf einer ersten Geraden angeordnet, und die erste Funkstation und die Relaisfunkstation oder Relaisfunkstationen mit einer geraden Nummerierung bezüglich ihrer Position bei der Weiterleitung sind zumindest annähernd auf einer zweiten angeordnet, wobei es sich bei der zweiten Gerade um eine zur ersten Gerade parallele Gerade handelt.

Bei der ersten und der zweiten Funkstation kann es sich um netzseitige oder teilnehmerseitige Funkstationen handeln, die erste und die zweite Funkstation können mobil oder auch stationär sein. Auch ist es möglich, dass die erste und/oder die zweite Funkstation als Relaisfunkstation fungieren, d.h. dass die betrachtete Nachrichtenübertragung zwischen der ersten und der zweiten Funkstation Bestandteil einer längeren Nachrichtenübertragung zwischen der ersten und einer anderen als der zweiten Funkstation oder zwischen der zweiten und einer anderen als der ersten Funkstation oder auch zwischen zwei anderen Funkstationen sein kann. Auch bei den Relaisfunkstationen kann es sich um netzseitige oder teilnehmerseitige, mobile oder stationäre Funkstationen handeln. Vorteilhaft ist es insbesondere, wenn es sich bei den Relaisfunkstationen um netzseitige stationäre Funkstationen handelt.

Die Funkstationen müssen nicht exakt auf den Geraden angeordnet sein, so können beispielsweise durch eine Anpassung an die Gegebenheiten vor Ort, welche Einschränkungen hinsichtlich der freien Wahl der Anbringungsorte für Relaisfunkstationen auferlegen können, Abweichungen von der exakten Positionierung auf Geraden auftreten. Dass die Funkstationen nur annähernd auf zwei parallelen Geraden angeordnet sind kann z.B. dadurch realisiert werden, dass die Funkstationen innerhalb des Volumens von zwei parallelen Zylindern, deren Längsachse jeweils von einer der parallelen Geraden gebildet wird, angeordnet sind, wobei der Radius des kreisförmigen Querschnitts der Zylinder klein gegenüber dem Abstand der beiden parallelen Geraden ist. Die Abweichung der Orte der Funkstationen von den parallelen Geraden ist somit klein gegenüber dem Abstand der beiden Geraden.

Nachrichten werden von der ersten Funkstation an eine erste Relaisfunkstation gesendet, welche die Nachrichten an eine zweite Relaisfunkstation weiterleitet. Die erste Funkstation und die erste Relaisfunkstation befinden sich auf unterschiedlichen der beiden parallelen Geraden. Bei der Weiterleitung durch die erste Relaisfunkstation handelt es sich in Bezug auf die Nachrichtenübertragung zwischen der ersten und der zweiten Funkstation um die erste Weiterleitung, die erste Relaisfunkstation trägt somit bezüglich ihrer Position bei der Weiterleitung die Nummer 1. Die erste, die dritte, und gegebenenfalls jede weitere "ungerade" Relaisfunkstationen zwischen der ersten und der zweiten Funkstation befinden sich auf einer Geraden. Ebenso befinden sich die erste Funkstation, die zweite Relaisfunkstation, und gegebenenfalls auch die weiteren "geraden" Relaisfunkstationen auf einer anderen Geraden, welche zu der Geraden der "ungeraden" Relaisfunkstationen parallel verläuft.

Die zweite Funkstation kann sich auch auf einer der beiden Geraden befinden, dies muss jedoch nicht der Fall sein. Vorteilhafterweise ist die zweite Funkstation auf der anderen Geraden angeordnet, als diejenige Relaisfunkstation, von welcher die zweite Funkstation die Nachrichten empfängt. Demgemäß ist bei einer ungeraden Gesamtanzahl an Relaisfunkstationen zwischen der ersten und der zweiten Funkstation die zweite Funkstation auf der zweiten Geraden angeordnet sein, und bei einer geraden Gesamtanzahl auf der ersten Geraden.

Durch die Anordnung der ersten Funkstation und der Relaisfunkstationen auf oder zumindest annähernd auf den beiden parallelen Geraden entsteht ein Zick-Zack-Muster bei der Übertragung von Nachrichten. Dieses Muster hat zur Folge, dass eine geringe Überschneidung von Funksignalen der verschiedenen Funkstationen erreichbar ist. Eine solche Zick-Zack Anordnung ist insbesondere vorteilhaft für gerade Straßenzüge oder Häuserschluchten, so dass die Relaisfunkstationen abwechselnd auf den beiden Straßenseiten angebracht werden können.

Es werden zur Weiterleitung der Nachrichten von den Relaisfunkstationen Antennen mit einer auf die jeweils folgende Relaisfunkstation gerichteten Abstrahlcharakteristik verwendet. Entsprechendes kann auch für die Versendung/Weiterleitung der Nachrichten zwischen der ersten Funkstation und der ihr benachbarten ersten Relaisfunkstation gelten. Die gerichtete Abstrahlcharakteristik ermöglicht die effiziente Ausnutzung der Zick-Zack Anordnung der Relaisfunkstationen. Durch eine gerichtete Abstrahlcharakteristik können durch örtliche Signaltrennung Interferenzen zwischen Signalen der verschiedenen Relaisfunkstationen verhindert bzw. verringert werden.

Zur Weiterleitung der Nachrichten in Richtung der zweiten Funkstation werden eine erste und eine zweite Funkfrequenz derart verwendet, dass von den Relaisfunkstationen mit einer ungeraden Nummerierung bezüglich ihrer Position bei der Weiterleitung die erste Funkfrequenz und von der ersten Funkstation und der Relaisfunkstation oder den Relaisfunkstationen mit einer geraden Nummerierung bezüglich ihrer Position bei der Weiterleitung die zweite Funkfrequenz verwendet wird. Zusätzlich können zur Weiterleitung der Nachrichten in Richtung der ersten Funkstation auch die erste und die zweite Funksfrequenz derart verwendet werden, dass von den RelaisFunkstationen mit einer ungeraden Nummerierung bezüglich ihrer Position bei der Weiterleitung die zweite Funkfrequenz und von der Relaisfunkstation oder den Relaisfunkstationen mit einer geraden Nummerierung bezüglich ihrer Position bei der Weiterleitung die erste Funkfrequenz verwendet wird. Somit wird jeweils bezüglich der Weiterleitung der Nachrichten abwechselnd von aufeinander folgenden Paaren an Relaisfunkstationen die erste und die zweite Funkfrequenz verwendet. Die Verwendung von lediglich zwei Funkfrequenzen zur Weiterleitung der Nachrichten entspricht einem geringen Frequency-Reuse-Faktor.

Einer vorteilhaften Weiterbildung der Erfindung gemäß verwendet mindestens eine Relaisfunkstation zur Kommunikation mit mindestens einer Teilnehmerfunkstation die gleiche Funkfrequenz wie zur Weiterleitung der Nachrichten. Entsprechendes kann auch für die erste Funkstation gelten. Dies kann sich auf alle oder auf manche Teilnehmerfunkstationen innerhalb des Funkabdeckungsbereiches der mindestens einen Relaisfunkstationen beziehen. Besonders vorteilhaft ist es, wenn die mindestens eine Relaisfunkstation zur Kommunikation mit der mindestens einen Teilnehmerfunkstation eine Antenne mit einer gerichteten Abstrahlcharakteristik verwendet, wobei sich die Richtung dieser Abstrahlcharakteristik von der Richtung der in Richtung der mindestens einen Teilnehmerfunkstation benachbarten Relaisfunkstation unterscheidet. Entsprechendes kann auch für die erste Funkstation gelten. Hierdurch können Interferenzen zwischen Signalen ausgeschaltet bzw. verringert werden, welche einerseits von der mindestens einen Relaisfunkstation an die mindestens eine Teilnehmerfunkstation abgestrahlt werden, und welche andererseits die mindestens eine Relaisfunkstation an eine andere Relaisfunkstation, welche ihr in Richtung der Teilnehmerfunkstation benachbart ist, aussendet.

Das erfindungsgemäße Funkkommunikationssystem umfasst eine erste Funkstation, eine zweite Funkstation und mindestens drei Relaisfunkstationen. Diese Relaisfunkstationen sind zum Weiterleiten von Nachrichten ausgestaltet, so dass Nachrichten zwischen der ersten Funkstation und der zweiten Funkstation über die Relaisfunkstationen übertragbar sind. Erfindungsgemäß sind die Relaisfunkstationen mit einer ungeraden Nummerierung bezüglich ihrer Position bei der Weiterleitung zumindest annähernd auf einer ersten Gerade angeordnet, und die erste Funkstation und die Relaisfunkstation oder Relaisfunkstationen mit einer geraden Nummerierung bezüglich ihrer Position bei der Weiterleitung sind zumindest annähernd auf einer zweiten zur ersten Geraden parallelen Geraden angeordnet. Mittel sind vorgesehen zur Weiterleitung der Nachrichten in Richtung der zweiten Funkstation derart, dass eine erste Funkfrequenz und eine zweite Funkfrequenz derart verwendet werden, dass von den Relaisfunkstationen mit einer bezüglich ihrer Reihenfolge bei der Weiterleitung ungeraden Nummerierung die erste Funkfrequenz, und von der ersten Funkstation und der Relaisfunkstation oder den Relaisfunkstationen mit einer bezüglich ihrer Reihenfolge bei der Weiterleitung geraden Nummerierung die zweite Funkfrequenz verwendet wird, und Antennen mit einer auf die jeweils folgende Relaisfunkstation gerichteten Abstrahlcharakteristik zur Weiterleitung der Nachrichten von den Relaisfunkstationen.

Das erfindungsgemäße Funkkommunikationssystem eignet sich insbesondere zur Durchführung des erfindungsgemäßen Verfahrens, wobei dies auch auf die Ausgestaltungen und Weiterbildungen zutrifft. Hierzu kann es weitere geeignete Mittel aufweisen.

Im folgenden wird die Erfindung anhand eines Ausführungsbeispiels näher erläutert. Dabei zeigen
- Figur 1:: einen Ausschnitt aus einem erfindungsgemäßen Funkkommunikationssystem,
- Figur 2:: eine erste räumliche Abstrahlcharakteristik von Funksignalen,
- Figur 3:: eine Verteilung von zwei Funkfrequenzen,
- Figur 4:: eine zweite räumliche Abstrahlcharakteristik von Funksignalen.

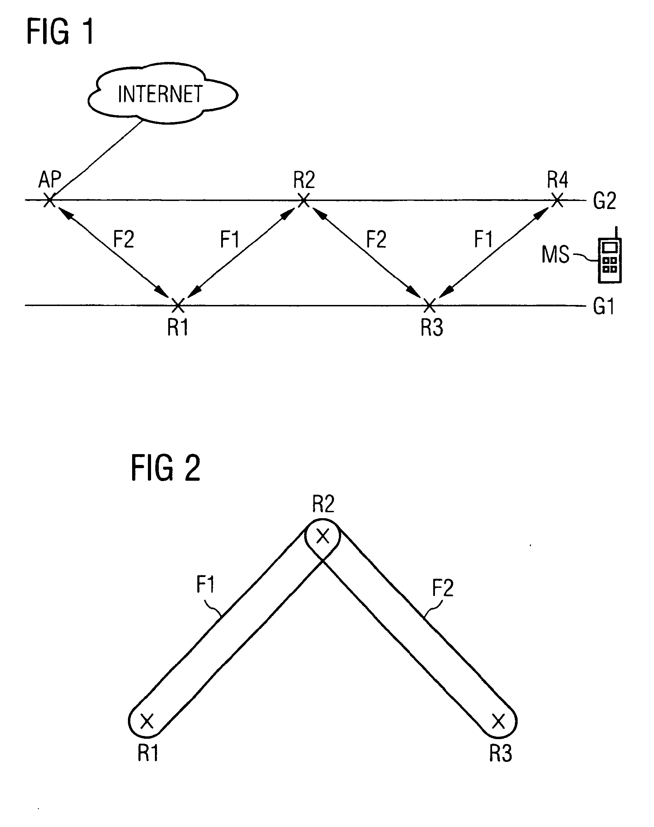

Der in Figur 1 dargestellte Ausschnitt aus einem Funkkommunikationssystem umfasst einen netzseitigen Funkzugangspunkt AP und eine teilnehmerseitige Mobilstation MS. Über den Funkzugangspunkt AP kann die Mobilstation MS mit anderen Kommunikationssystemen, wie z.B. dem Internet INTERNET oder zellularen Mobilfunkkommunikationssystemen, z.B. mit Systemen nach dem Standard GSM oder UMTS, kommunizieren. Die Mobilstation MS befindet sich nicht innerhalb der Funkreichweite des Funkzugangspunktes AP, so dass eine direkte Kommunikation zwischen der Mobilstation MS und dem Funkzugangspunkt AP nicht möglich ist. Daher werden zur Weiterleitung von Nachrichten zwischen der Mobilstation MS und dem Funkzugangspunkt AP eine Reihe von Relaisfunkstationen R1, R2, R3 und R4 eingesetzt. Bei den Relaisfunkstationen R1, R2, R3 und R4 handelt es sich um ortsfeste netzseitige Funkstationen, welche ausschließlich der Weiterleitung von Nachrichten dienen. Sie führen keine Bearbeitung oder Auswertung von Nachrichten durch und erzeugen und versenden keine eigenen Nachrichten.

Eine Nachrichtenübertragung von dem Funkzugangspunkt AP zur Mobilstation MS erfolgt, indem der Funkzugangspunkt AP die Nachricht an die Relaisfunkstation R1 sendet, welche die Nachricht an die Relaisfunkstation R2 weiterleitet, welche die Nachricht an die Relaisfunkstation R3 weiterleitet, welche die Nachricht an die Relaisfunkstation R4 weiterleitet, welche schließlich die Nachricht an die Mobilstation MS weiterleitet.

Erfindungsgemäß sind diejenigen Relaisfunkstationen, welche die ungeradzahligen Weiterleitungen übernehmen, d.h. die beiden Relaisfunkstationen R1 und R3, auf einer ersten Geraden G1 angeordnet. Die anderen Relaisfunkstationen, welche die geradzahligen Weiterleitungen übernehmen, d.h. die beiden Relaisfunkstationen R2 und R4, sind auf einer zweiten Geraden G2 angeordnet. Die Geraden G1 und G2 verlaufen parallel zueinander. In der Figur 1 ist der Funkzugangspunkt AP auf der zweiten Geraden G2 angebracht. Er kann sich jedoch auch an einem anderen Ort, so z.B. zwischen den beiden Geraden G2 und G2 befinden. Die Zick-Zack Anordnung der Relaisfunkstationen R1, R2, R3 und R4 ist insbesondere für den Fall sinnvoll, dass die Weiterleitung der Nachrichten zwischen dem Funkzugangspunkt AP und der Mobilstation MS entlang eines auf beiden Seiten von Gebäuden gesäumten Straßenzuges erfolgt. Der Funkzugangspunkt AP kann sich dann z.B. an der Seite eines Hauses über Kopfhöhe der Fußgänger befinden. An entsprechenden Stellen auf etwa der gleichen Höhe über der Straße auf abwechselnd gegenüber liegenden Straßenseiten können dann die Relaisfunkstationen R1, R2, R3 und R4 angebracht werden. Die Mobilstation MS kann sich z.B. in einem Auto, d.h. wie in Figur 1 dargestellt zwischen den beiden Geraden G1 und G2, oder auch auf einem Bürgersteig, d.h. in etwa auf einer der Geraden G1 oder G2, befinden.

Für die Nachrichtenversendung zwischen dem Funkzugangspunkt AP und der Relaisfunkstation R1 wird die Funkfrequenz F2 verwendet, für die Nachrichtenversendung zwischen der Relaisfunkstation R1 und der Relaisfunkstation R2 die Funkfrequenz F1, für die Nachrichtenversendung zwischen der Relaisfunkstation R2 und der Relaisfunkstation R3 wieder die Funkfrequenz F2, und für die Nachrichtenversendung zwischen der Relaisfunkstation R3 und der Relaisfunkstation R4 schließlich wieder die Funkfrequenz F1. Somit erfolgt die gesamte Nachrichtenübertragung sowohl von dem Funkzugangspunkt AP zur Mobilstation MS als auch von der Mobilstation MS zum Funkzugangspunkt AP unter Verwendung von lediglich zwei Funkfrequenzen.

Der Funkzugangspunkt AP und die Relaisfunkstationen R1, R2, R3 und R4 verwenden zur Kommunikation untereinander Antennen mit stark gerichteter Abstrahlcharakteristik, wie in Figur 2 beispielhaft anhand der Relaisfunkstationen R1, R2, und R3 dargestellt. Die Relaisfunkstation R2 empfängt von der Relaisfunkstation R1 stark auf sie ausgerichtete Signale auf der Funkfrequenz F1 und sendet stark auf die Relaisfunkstation ausgerichtete Signale an die Relaisfunkstation R3 auf der Funkfrequenz F2. Entsprechendes gilt für die Übertragungen in die andere Richtung, d.h. von der Relaisfunkstation R3 an die Relaisfunkstation R2 und von der Relaisfunkstation R2 an die Relaisfunkstation R1. Aufgrund der unterschiedlichen Funkfrequenzen sind somit für die Relaisfunkstation R2 die Signale der Relaisfunkstationen R1 und R3 voneinander unterscheidbar. Aufgrund der gerichteten Abstrahlung der Funksignale wird praktisch keine Interferenz zwischen Funksignalen der gleichen Funkfrequenz erzeugt. Dies folgt daraus, dass die Richtung der Abstrahlung für Signale der gleichen Funkfrequenz in etwa parallel bzw. antiparallel zueinander ist. Somit kann die Funkfrequenz F1 einerseits von den Relaisfunkstationen R1 und R2 und andererseits von den Relaisfunkstationen R3 und R4 gleichzeitig verwendet werden, ohne dass gegenseitige Störungen auftreten. Entsprechendes gilt für die beiden Kommunikationen einerseits zwischen dem Funkzugangspunkt AP und der Relaisfunkstation R1 und andererseits zwischen den Relaisfunkstationen R2 und R3. Somit ermöglicht die Zick-Zack Anordnung der Relaisfunkstationen, Nachrichten unter Verwendung von lediglich zwei Funkfrequenzen über eine beliebig große Anzahl an Relaisfunkstationen weiterzuleiten.

Wenn die Relaisfunkstationen hingegen in einer Reihe angeordnet wären, lägen die Richtungen der einzelnen abgestrahlten Signale auf einer Geraden, so dass Signale unerwünscht interferieren würden. In diesem Fall müsste eine höhere Anzahl an Funkfrequenzen eingesetzt oder eine schlechtere Übertragungsqualität in Kauf genommen werden.

Die Verbindungen zwischen dem Funkzugangspunkt AP und der Relaisfunkstation R1, zwischen den Relaisfunkstationen R1 und R2, zwischen den Relaisfunkstationen R2 und R3, sowie zwischen den Relaisfunkstationen R3 und R4 werden wie beschrieben bidirektional betrieben, d.h. Nachrichten können sowohl von dem Funkzugangspunkt AP zu der Mobilstation MS, als auch von der Mobilstation MS zu dem Funkzugangspunkt AP übertragen werden. Zur Unterstützung der bidirektionalen Übertragung eignet sich ein TDD-Verfahren (TDD: Time Division Duplex). Hierdurch können asymmetrische Nachrichtenflüsse, wie sie z.B. durch das Herunterladen von Daten aus dem Internet verursacht werden, realisiert werden.

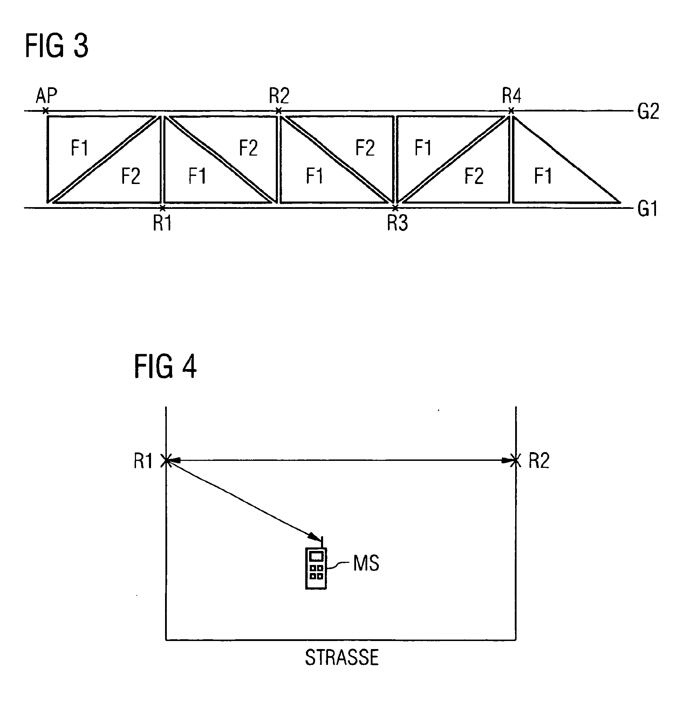

Während in Figur 1 nur die eine Mobilstation MS dargestellt ist, welche mit der Relaisfunkstation R4 kommuniziert, können sich in dem gesamten Gebiet der Funkabdeckung der Relaisfunkstationen R1, R2, R3 und R4, sowie des Funkzugangspunktes AP Teilnehmerfunkstationen befinden, welche mit den Relaisfunkstationen R1, R2, R3 und R4 und dem Funkzugangspunkt AP kommunizieren können. Vorteilhafterweise werden für die Kommunikation zwischen Teilnehmerfunkstationen und den Relaisfunkstationen R1, R2, R3 und R4, sowie zwischen Teilnehmerfunkstationen und dem Funkzugangspunkt AP die beiden Funkfrequenzen F1 und F2 eingesetzt. Figur 3 zeigt eine Aufteilung der beiden Funkfrequenzen F1 und F2 zwischen den Relaisfunkstationen R1, R2, R3 und R4 und dem Funkzugangspunkt AP zur Kommunikation mit Teilnehmerfunkstationen. Hierfür werden von den Relaisfunkstationen R1, R2, R3 und R4 und dem Funkzugangspunkt AP Antennen eingesetzt, welche in Sektoren gerichtet ausstrahlen. In Figur 3 sind diese Sektoren vereinfachend als Dreiecke dargestellt.

Der Funkzugangspunkt AP kommuniziert in einem Sektor in Richtung der Relaisfunkstation R1 mit Teilnehmerfunkstationen auf der Funkfrequenz F1, während die Relaisfunkstation R1 in einem Sektor in Richtung des Funkzugangspunktes AP mit Teilnehmerfunkstationen auf der Funkfrequenz F2 kommuniziert. Zwischen den Relaisfunkstationen R1 und R2 kommuniziert die Relaisfunkstation R1 mit Teilnehmerfunkstationen auf der Funkfrequenz F1 und die Relaisfunkstation R2 auf der Funkfrequenz F2, usw. In Realität sollten sich die als Dreieck dargestellten Sektoren zumindest leicht überschneiden, um eine vollständige Funkabdeckung zu gewährleisten.

Die Kommunikation zwischen den Relaisfunkstationen R1 und R2 erfolgt auf der Funkfrequenz F1, so dass im Bereich zwischen den Relaisfunkstationen R1 und R2 auf der Funkfrequenz F1 sowohl eine Kommunikation zwischen den beiden Relaisfunkstationen R1 und R2, als auch zwischen der Relaisfunkstation R1 und Teilnehmerfunkstationen stattfinden kann. Eine gegenseitige Störung dieser beiden Kommunikationen kann jedoch dadurch vermieden oder reduziert werden, dass die beschriebene gerichtete Ausstrahlung der Signale erfolgt. Werden die Relaisfunkstationen R1, R2, R3 und R4 und auch der Funkzugangspunkt AP in etwa auf gleicher Höhe über der Kopfhöhe von sich auf der Straße befindlichen Personen installiert, so erreichen gerichtet ausgestrahlte Signale zwischen den Relaisfunkstationen R1, R2, R3 und R4 bzw. dem Funkzugangspunkt AP nicht die Teilnehmerfunkstationen. Die Abstrahlung von Signalen an Teilnehmerfunkstationen durch die Relaisfunkstationen R1, R2, R3 und R4 und durch den Funkzugangspunkt AP erfolgt nach unten ausgerichtet.

Figur 4 stellt diese beiden verschiedenen Abstrahlrichtungen beispielhaft für die Relaisfunkstationen R1 und R2 dar. Die beiden Relaisfunkstationen R1 und R2 sind in etwa auf der gleichen Höhe über der Straße STRAßE angebracht, so dass die Inter- Relaisfunkstation-Kommunikation zwischen den Relaisfunkstationen R1 und R2 in etwa parallel zur Straße STRAßE erfolgt. Die Mobilstation MS, welche sich in Figur 4 in etwa zwischen den Relaisfunkstationen R1 und R2 befindet, so dass sie mit der Relaisfunkstation R1 kommunizieren kann, befindet sich deutlich näher an der Straße STRAßE als die beiden Relaisfunkstationen R1 und R2. Die Relaisfunkstation R1 versendet Signale an die Mobilstation MS in Abwärtsrichtung (Downlink) mit einer nach unten geneigten Abstrahlrichtung. Somit entsteht keine Interferenz zwischen der Inter-Relaisfunkstation-Kommunikation und der Kommunikation zwischen Relaisfunkstationen und Teilnehmerfunkstationen in Abwärtsrichtung.

Die Teilnehmerfunkstationen hingegen strahlen ihre Signale ungerichtet aus. Somit erzeugt ein in Aufwärtsrichtung von der Teilnehmerfunkstation MS der Figur 4 ausgestrahltes Signal Interferenz zur Inter-Relaisfunkstation-Kommunikation. Dadurch, dass die Inter-Relaisfunkstation-Kommunikation stark gerichtet ist, ist die Signalleistung innerhalb der Keulen der Inter-Relaisfunkstation-Kommunikation deutlich größer als die von einer Relaisfunkstation empfangene Signalleistung eines von einer Teilnehmerfunkstation ungerichtet ausgestrahlten Signals, so dass die Inter-Relaisfunkstation-Kommunikation durch die Kommunikation in Aufwärtsrichtung (Uplink) der Teilnehmerfunkstationen kaum gestört wird.

Zur weiteren Entkopplung von Signalen können interferenzauslöschende Verfahren (Interference Cancellation) eingesetzt werden. So kann z.B. die gleichzeitige Detektion von Signalen von verschiedenen Sendern (Multi User Detection) gewinnbringend eingesetzt werden.

Sollen Gleichkanalinterferenzen weiter reduziert werden, so kann zur Versorgung der Teilnehmerfunkstationen eine dritte Funkfrequenz eingesetzt werden, so dass die Aufwärts- und/oder Abwärts-Kommunikation der Teilnehmerfunkstationen im Frequenzbereich von der Inter-Relaisfunkstation-Kommunikation getrennt wird. In diesem Fall kann - bei unveränderter Bandbreite in Bezug auf die ersten beiden Funkfrequenzen - ein höherer Gesamtdurchsatz an Nachrichten realisiert werden.

Verwendet die Relaisfunkstation R1 in ihrem Sektor in Richtung der Relaisfunkstation R2 an Stelle der Funkfrequenz F1 die Funkfrequenz F2, so wird in dem räumlichen Bereich zwischen den Relaisfunkstationen R1 und R2 für die Kommunikation zwischen den Relaisfunkstationen R1 und R2 die Funkfrequenz F1 und für die Kommunikation zwischen den Relaisfunkstationen R1 bzw. R2 und Teilnehmerfunkstationen die Funkfrequenz F2 verwendet. Dies ist vorteilhaft in Bezug auf die Interferenz zwischen der Inter-Relaisfunkstation-Kommunikation und der Kommunikation zwischen Relaisfunkstationen und Teilnehmerfunkstationen. Nachteilhaft ist diese Frequenzaufteilung jedoch für Teilnehmerfunkstationen, welche sich in der Mitte zwischen den Relaisfunkstationen R1 und R2 befinden. Kommuniziert eine Teilnehmerfunkstation beispielsweise mit der Relaisfunkstation R2, so wird sie durch die an eine andere Teilnehmerfunkstation auf der gleichen Funkfrequenz ausgestrahlten Signale der Relaisfunkstation R1 gestört. Um dies zu vermeiden, sollte eine weitere Separierung der Funksignale, beispielsweise durch Codes oder Zeitschlitze, erfolgen, welche unter den Relaisfunkstationen aufgeteilt werden.

Der Funkzugangspunkt AP und die Relaisfunkstationen R2 und R3, d.h. die Funkstationen, welche sich auf der Geraden G2 befinden, sowie die Relaisfunkstationen R1 und R3, d.h. die Funkstationen, welche sich auf der Geraden G1 befinden, weisen in Figur 1 etwa die gleichen Abstände zueinander auf. Dies resultiert darin, dass die auf der gleichen Funkfrequenz ausgestrahlten Signale annähernd parallel bzw. antiparallel zueinander sind. Während diese Verteilung aufgrund der zu aufzubringenden Sendeleistungen vorteilhaft ist, können die Abstände den realen Gegebenheiten, d.h. den Möglichkeiten zur Installierung von Funkzugangspunkt und Relaisfunkstationen, angepasst werden und sich somit voneinander unterscheiden.

Während in Figur 1 der Fall dargestellt ist, dass die beiden Geraden G1 und G2 exakt parallel verlaufen, ist das Verfahren auf die Positionierung der Relaisfunkstationen R1, R2, R3 und R4 und gegebenenfalls auch des Funkzugangspunktes AP auf Geraden anwendbar, welche nur annähern parallel verlaufen. Auch müssen die Relaisfunkstationen R1, R2, R3 und R4 nicht exakt auf den Geraden G1 und G2 positioniert sein, zur Erzeugung des für die erfindungsgemäße Nachrichtenweiterleitung typischen Zick-Zack-Musters ist es ausreichend, wenn die Relaisfunkstationen R1, R2, R3 und R4 annähernd auf den beiden Geraden angeordnet sind. Aufgrund der obigen Ausführungen ergibt sich, dass die zulässigen Abweichungen von der Parallelität der Geraden bzw. von der exakten Positionierung auf den Geraden z.B. von dem Abstand auf den Geraden zwischen den Funkstationen und der konkreten Ausprägung der Abstrahlcharakteristik für die Inter-Relaisfunkstation-Kommunikation ist.

Das beschriebene Vorgehen kombiniert den Einsatz einer stark gerichteten Inter-Relaisfunkstation-Kommunikation unter Verwendung einer Zick-Zack Anordnung mit einem Einsatz von sektorisierten Antennen zur Versorgung von Teilnehmerfunkstationen durch Relaisfunkstationen. Dies resultiert in einer vorteilhaften Ausprägung von SDMA, bei der lediglich zwei Funkfrequenzen benötigt werden.

## Patentansprüche

1. Verfahren zur Kommunikation per Funk,
bei dem Nachrichten zwischen einer ersten Funkstation (AP) und einer zweiten Funkstation (MS) übertragen werden, indem die Nachrichten durch mindestens drei Relaisfunkstationen nacheinander weitergeleitet werden,
wobei die Relaisfunkstationen mit einer bezüglich ihrer Reihenfolge bei der Weiterleitung ungeraden Nummerierung zumindest annähernd auf einer ersten Geraden (G1) angeordnet sind, und
die erste Funkstation (AP) und die Relaisfunkstation oder Relaisfunkstationen mit einer bezüglich ihrer Reihenfolge bei der Weiterleitung geraden Nummerierung zumindest annähernd auf einer zweiten zur ersten Geraden (G1) beabstandeten parallelen Geraden (G2) angeordnet sind,
**dadurch gekennzeichnet,**
**dass** zur Weiterleitung der Nachrichten in Richtung der zweiten Funkstation (MS) eine erste Funkfrequenz (F1) und eine zweite Funkfrequenz (F2) derart verwendet werden, dass
von den Relaisfunkstationen mit einer bezüglich ihrer Reihenfolge bei der Weiterleitung ungeraden Nummerierung die erste Funkfrequenz (F1), und
von der ersten Funkstation (AP) und der Relaisfunkstation oder den Relaisfunkstationen mit einer bezüglich ihrer Reihenfolge bei der Weiterleitung geraden Nummerierung die zweite Funkfrequenz (F2) verwendet wird,
und **dass** zur Weiterleitung der Nachrichten von den Relaisfunkstationen Antennen mit einer auf die jeweils folgende Relaisfunkstation gerichteten Abstrahlcharakteristik verwendet werden.

2. Verfahren nach Anspruch 1, **dadurch gekennzeichnet,**
**dass** zur Weiterleitung der Nachrichten in Richtung der ersten Funkstation (AP) die erste Funkfrequenz (F1) und die zweite Funkfrequenz (F2) derart verwendet werden, dass von den Relaisfunkstationen mit einer bezüglich ihrer Reihenfolge bei der Weiterleitung ungeraden Nummerierung die zweite Funkfrequenz (F2) und von der Relaisfunkstation oder den Relaisfunkstationen mit einer bezüglich ihrer Reihenfolge bei der Weiterleitung geraden Nummerierung die erste Funkfrequenz (F1) verwendet wird.

3. Verfahren nach einem der Ansprüche 1 bis 2, **dadurch**
**gekennzeichnet,**
**dass** mindestens eine Relaisfunkstation zur Kommunikation mit mindestens einer Teilnehmerfunkstation die gleiche Funkfrequenz verwendet wie zur Weiterleitung der Nachrichten.

4. Verfahren nach Anspruch 3, **dadurch gekennzeichnet,**
**dass** die mindestens eine Relaisfunkstation zur Kommunikation mit der mindestens einen Teilnehmerfunkstation eine Antenne mit einer gerichteten Abstrahlcharakteristik verwendet, wobei sich die Richtung dieser Abstrahlcharakteristik von der Richtung der in Richtung der mindestens einen Teilnehmerfunkstation benachbarten Relaisfunkstation unterscheidet.

5. Funkkommunikationssystem, umfassend eine erste Funkstation (AP), eine zweite Funkstation (MS) und mindestens drei Relaisfunkstationen,
wobei die Relaisfunkstationen zum Weiterleiten von Nachrichten ausgestaltet sind, so dass Nachrichten zwischen der ersten Funkstation (AP) und der zweiten Funkstation (MS) über die Relaisfunkstationen übertragbar sind,
dass die Relaisfunkstationen mit einer bezüglich ihrer Reihenfolge bei der Weiterleitung ungeraden Nummerierung zumindest annähernd auf einer ersten Geraden (G1) angeordnet sind, und
**dass** die erste Funkstation (AP) und die Relaisfunkstation oder Relaisfunkstationen mit einer bezüglich ihrer Reihenfolge bei der Weiterleitung geraden Nummerierung zumindest annähernd auf einer zweiten zur ersten Geraden (G1)beabstandeten parallelen Geraden (G2) angeordnet sind,
**gekennzeichnet durch**
Mittel zur Weiterleitung der Nachrichten in Richtung der zweiten Funkstation (MS) derart, dass eine erste Funkfrequenz (F1) und eine zweite Funkfrequenz (F2) derart verwendet werden, dass von den Relaisfunkstationen mit einer bezüglich ihrer Reihenfolge bei der Weiterleitung ungeraden Nummerierung die erste Funkfrequenz (F1), und von der ersten Funkstation (AP) und der Relaisfunkstation oder den Relaisfunkstationen mit einer bezüglich ihrer Reihenfolge bei der Weiterleitung geraden Nummerierung die zweite Funkfrequenz (F2) verwendet wird, und
Antennen mit einer auf die jeweils folgende Relaisfunkstation gerichteten Abstrahlcharakteristik zur Weiterleitung der Nachrichten von den Relaisfunkstationen.

## Claims

1. A method for radio communication,
with which messages are transmitted between a first radio station (AP) and a second radio station (MS), in that the messages are forwarded by at least three radio relay stations one after the other, with the radio relay stations with an odd number in respect of their sequence during forwarding being disposed at least approximately on a first straight line (G1) and
the first radio station (AP) and the radio relay station or radio relay stations with an even number in respect of their sequence during forwarding being disposed at least approximately on a second straight line (G2) at a distance from and parallel to the first straight line (G1),
**characterised in that**
a first radio frequency (F1) is used to forward messages in the direction of the second radio station (MS) and a second radio frequency is used such that
the first radio frequency (F1) is used by the radio relay stations with an odd number in respect of their sequence during forwarding and
the second radio frequency (F2) is used by the first radio station (AP) and the radio relay station or radio relay stations with an even number in respect of their sequence during forwarding
and that antennae with emission characteristics directed towards the next radio relay station in each instance are used to forward messages from the radio relay stations.

2. The method as claimed in claim 1, **characterised in that** the first radio frequency (F1) is used to forward messages in the direction of the first radio station (AP) and the second radio frequency (F2) is used such that the second radio frequency (F2) is used by the radio relay stations with an odd number in respect of their sequence during forwarding and
the first radio frequency (F1) is used by the radio relay station or radio relay stations with an even number in respect of their sequence during forwarding.

3. The method as claimed in one of claims 1 to 2,
**characterised in that**
at least one radio relay station uses the same radio frequency to communicate with at least one radio subscriber station as to forward messages.

4. The method as claimed in claim 3, **characterised in that** the at least one radio relay station uses an antenna with a directional emission characteristic to communicate with the at least one radio subscriber station, the direction of said directional characteristic being different from the direction of the adjacent radio relay station in the direction of the at least one subscriber radio station.

5. A radio communication system, comprising a first radio station (AP), a second radio station (MS) and at least three radio relay stations,
the radio relay stations being configured to forward messages, such that messages can be transmitted between the first radio station (AP) and the second radio station (MS) via the radio relay stations,
the radio relay stations with an odd number in respect of their sequence during forwarding being disposed at least approximately on a first straight line (G1) and
the first radio station (AP) and the radio relay station or radio relay stations with an even number in respect of their sequence during forwarding being disposed at least approximately on a second straight line (G2) which is at a distance from and parallel to the first straight line (G1),
**characterised by**
means for forwarding messages in the direction of the second radio station (MS) such that a first radio frequency (F1) and
a second radio frequency (F2) are used such that the first frequency (F1) is used by the radio relay stations with an odd number in respect of their sequence during forwarding and
the second radio frequency (F2) is used by the first radio station (AP) and the radio relay station or radio relay stations with an even number in respect of their sequence during forwarding and
antennae with an emission characteristic directed towards the next radio relay station in each instance are used to forward messages from the radio relay stations.

## Revendications

1. Procédé de communication par radio,
dans lequel des messages sont acheminés entre une première station radio (AP) et une deuxième station radio (MS), du fait que les message sont acheminés les uns après les autres par au moins trois stations radio relais,
les stations radio relais ayant une numérotation impaire, en ce qui concerne leur ordre lors de l'acheminement, étant disposées au moins approximativement sur une première droite (G1), et
la première station radio (AP) et la station radio relais ou les stations radio relais ayant une numérotation paire, en ce qui concerne leur ordre lors de l'acheminement, étant disposées au moins approximativement sur une deuxième droite (G2) parallèle à la première droite (G1) et distancée de celle-ci,
**caractérisé en ce**
**que** pour l'acheminement des messages en direction de la deuxième station radio (MS), une première radiofréquence (F1) et une deuxième radiofréquence (F2) sont utilisées de telle manière que
la première radiofréquence (F1) est utilisée par les stations radio relais ayant une numérotation impaire en ce qui concerne leur ordre lors de l'acheminement, et
**que** la deuxième radiofréquence (F2) est utilisée par la première station radio (AP) et par la station radio relais ou les stations radio relais ayant une numérotation paire en ce qui concerne leur ordre lors de l'acheminement,
et en ce que pour l'acheminement des messages par les stations radio relais, des antennes ayant une caractéristique de rayonnement dirigée sur la station radio relais respectivement suivante sont utilisées.

2. Procédé selon la revendication 1, **caractérisé en ce**
**que** pour l'acheminement des messages en direction de la première station radio (AP), la première radiofréquence (F1) et la deuxième radiofréquence (F2) sont utilisées de telle manière
**que** la deuxième radiofréquence (F2) est utilisée par les stations radio relais ayant une numérotation impaire en ce qui concerne leur ordre lors de l'acheminement, et que la première radiofréquence (F1) est utilisée par la station radio relais ou les stations radio relais ayant une numérotation paire en ce qui concerne leur ordre lors de l'acheminement.

3. Procédé selon l'une quelconque des revendications 1 à 2,
**caractérisé en ce**
**qu'**au moins une station radio relais, pour la communication avec au moins une station radio d'abonné, utilise la même radiofréquence que pour l'acheminement des messages.

4. Procédé selon la revendication 3, **caractérisé en ce**
**que** l'au moins une station radio relais, pour la communication avec l'au moins une station radio d'abonné, utilise une antenne ayant une caractéristique de rayonnement dirigée, la direction de cette caractéristique de rayonnement se distinguant de la direction de la station radio relais voisine à l'au moins une station radio d'abonné.

5. Système de radiocommunication, comprenant une première station radio (AP), une deuxième station radio (MS) et au moins trois stations radio relais,
les stations radio relais étant conçues pour acheminer des messages, de sorte que des messages sont transmissibles entre la première station radio (AP) et la deuxième station radio (MS) par l'intermédiaire des stations radio relais,
que les stations radio relais ayant une numération impaire en ce qui concerne leur ordre lors de l'acheminement sont disposées au moins approximativement sur une première droite (G1), et
que la première station radio (AP) et la station radio relais ou les stations radio relais ayant une numération paire en ce qui concerne leur ordre lors de l'acheminement sont disposées au moins approximativement sur une deuxième droite (G2) parallèle à la première droite (G1) et
distancée de celle-ci,
**caractérisé par**
des moyens pour l'acheminement des message en direction de la deuxième station radio (MS), de telle manière qu'une première radiofréquence (F1) et une deuxième radiofréquence (F2) sont utilisées de telle manière que la première radiofréquence (F1) est utilisée par les stations radio relais ayant une numérotation impaire en ce qui concerne leur ordre lors de l'acheminement, et que la deuxième radiofréquence (F2) est utilisée par la première station radio (AP) et par la station radio relais ou les stations radio relais ayant une numérotation paire en ce qui concerne leur ordre lors de l'acheminement, et par des antennes ayant une caractéristique de rayonnement dirigée sur la station radio relais respectivement suivante pour l'acheminement des messages par les stations radio relais.
